# FASCICULE DE BREVET EUROPEEN

(11) **EP 4 178 836 B1**
(45) Date de publication et mention de la délivrance du brevet: **12.03.2025**
(21) Numéro de dépôt: 21731455.8
(22) Date de dépôt: 07.06.2021
(51) Int. Cl.: B60S 1/56, G02B 1/18, G02B 27/00, G03B 17/08, B60S 1/54

(54) **DISPOSITIF DE PROTECTION D'UN CAPTEUR OPTIQUE ET SYSTÈME D'ASSISTANCE À LA CONDUITE CORRESPONDANT**
VORRICHTUNG ZUM SCHUTZ EINES OPTISCHEN SENSORS UND ENTSPRECHENDES FAHRERASSISTENZSYSTEM
DEVICE FOR PROTECTING AN OPTICAL SENSOR AND CORRESPONDING DRIVER ASSISTANCE SYSTEM

(30) Priorité: 08.07.2020 FR 2007244
(43) Date de publication de la demande: 17.05.2023
(73) Titulaire: Valeo Systèmes d'Essuyage, 78322 Le Mesnil Saint Denis (FR)
(72) Inventeur: GOSSELE, Frédéric, 78322 LE MESNIL SAINT DENIS (FR); BRETAGNOL, Frédéric, 78322 LE MESNIL SAINT DENIS (FR); TREBOUET, Marcel, 78322 LE MESNIL SAINT DENIS (FR)
(74) Mandataire: Valeo Visibility
(86) Numéro de dépôt international: PCT/EP2021/065190
(87) Numéro de publication internationale: WO 2022/008144

(56) Documents cités:
- FR-A1- 3 054 459
- FR-A1- 3 058 651

## Description

La présente invention se rapporte au domaine de l'aide à la conduite et notamment aux systèmes d'assistance à la conduite, implantés sur certains véhicules, le système d'assistance à la conduite pouvant comporter un capteur optique, comme par exemple une caméra comprenant un objectif, notamment comprenant au moins une lentille. Plus particulièrement, l'invention concerne un dispositif de protection d'un tel capteur optique. L'invention concerne également un procédé d'assemblage d'un tel dispositif de protection.

Actuellement, des caméras de vision avant, arrière, ou encore latérales équipent un grand nombre de véhicules automobiles. Elles font notamment partie de systèmes d'assistance à la conduite, tels que des systèmes d'aide au stationnement, ou encore des systèmes de détection de franchissement de ligne.

On connait des caméras qui sont installées à l'intérieur de l'habitacle d'un véhicule contre la lunette / vitre arrière en visant vers l'arrière depuis la lunette arrière du véhicule. Ces caméras sont bien protégées des aléas climatiques extérieurs et des salissures causées par des polluants organiques ou minéraux. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

Pour cette raison, on préfère donc installer les caméras des systèmes d'assistance à la conduite, à l'extérieur des véhicules à différents endroits selon l'utilisation souhaitée, par exemple au niveau du pare-chocs arrière ou avant, ou au niveau de la plaque d'immatriculation arrière ou avant du véhicule. Dans ce cas, la caméra est donc fortement exposée aux projections de saletés minérales ou organiques qui peuvent se déposer sur son optique et ainsi réduire son efficacité, voire la rendre inopérante. En particulier par temps de pluie, on constate des projections de pluie et de saletés qui peuvent grandement affecter l'opérabilité du système d'assistance à la conduite comprenant une telle caméra. Les surfaces des optiques des caméras doivent être nettoyées afin de garantir leur bon état de fonctionnement.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps. Cependant, l'utilisation de ces gicleurs entraine une augmentation des couts de fonctionnement d'un tel système d'assistance à la conduite car ils nécessitent l'utilisation de quantités de liquide de nettoyage assez importantes.

Selon une autre solution, la caméra est agencée dans un dispositif de protection. Cependant, un tel dispositif de protection est très encombrant à installer. Or, la réduction de l'encombrement est un objectif constant dans le domaine automobile, et plus particulièrement dans le domaine de l'aide à la conduite.

Un dispositif de protection d'un capteur optique de système d'assistance à la conduite pour véhicule automobile est décrit dans la publication référencée FR3058651.

La présente invention se propose de pallier au moins partiellement les inconvénients ci-dessus mentionnés en présentant une alternative d'un dispositif de protection d'un capteur optique permettant d'empêcher le dépôt de salissures sur le capteur optique tel qu'une caméra, et dont l'agencement est optimisé de façon à réduire l'encombrement.

À cet effet l'invention a pour objet un dispositif de protection d'un capteur optique de système d'assistance à la conduite pour véhicule automobile, le capteur optique comprenant une optique, ledit dispositif comportant :
- un élément optique configuré pour être disposé en amont de l'optique du capteur optique et monté mobile en rotation autour d'un premier axe de rotation, et
- un moteur, notamment un moteur électrique, configuré pour entrainer en rotation l'élément optique.

Selon l'invention, le moteur comprend un rotor configuré pour tourner autour d'un deuxième axe de rotation sécant avec le premier axe de rotation de l'élément optique.

Un tel agencement permet de réduire l'encombrement du dispositif de protection et facilite notamment un aménagement dans un même boitier pour son assemblage sur un véhicule automobile.

Le dispositif de protection du capteur optique peut en outre comporter une ou plusieurs caractéristiques suivantes, prises séparément ou en combinaison :
- le deuxième axe de rotation du moteur est sensiblement perpendiculaire au premier axe de rotation de l'élément optique ;
- l'élément optique est au moins en partie transparent ;
- l'élément optique est distinct du capteur optique ;
- l'élément optique est configuré pour être agencé par rapport à l'optique du capteur optique, de sorte que le premier axe de rotation de l'élément optique soit parallèle confondu avec l'axe optique du capteur optique ;
- l'élément optique est configuré pour être agencé par rapport à l'optique du capteur optique, de sorte que le premier axe de rotation de l'élément optique soit confondu avec l'axe optique du capteur optique ;
- ledit dispositif comporte au moins un moyen de transmission du mouvement du rotor du moteur à l'élément optique ;
- le moyen de transmission comporte au moins deux roues crantées, dont une première roue crantée configurée pour être entrainée par le rotor du moteur et configurée pour entrainer une deuxième roue crantée ;
- ledit dispositif comporte un boitier configuré pour recevoir le capteur optique et le moteur ;
- le capteur optique et le moteur sont reçus dans un même logement du boitier ;
- le boitier est configuré pour recevoir ledit au moins un moyen de transmission ;
- le capteur optique, le moteur et ledit au moins un moyen de transmission sont reçus dans un même logement du boitier ;
- ledit dispositif comporte en outre un module de génération et/ou de projection d'air sur au moins une zone de l'élément optique ;
- le module de génération et/ou de projection d'air est configuré pour générer et projeter un flux d'air comprimé ;
- le flux d'air comprimé est de préférence de pression inférieure à 10bars ;
- le module de génération et/ou de projection d'air est configuré pour générer un volume d'air prédéterminé, par exemple de l'ordre de 10mL ;
- le module de génération et/ou de projection d'air comporte au moins une buse de projection d'air ;
- la buse de projection d'air est agencée fixe par rapport à l'élément optique ;
- la buse de projection d'air est agencée de manière à projeter un flux d'air sur la zone centrale de l'élément optique ;
- le module de génération et/ou de projection d'air comprend au moins un organe de génération d'air ;
- ledit au moins un organe de génération d'air est choisi parmi au moins un piston, une pompe, un réservoir d'air, une turbine ;
- le module de génération et/ou de projection d'air comprend au moins une vanne ou électrovanne ;
- le module de génération et/ou de projection d'air comporte au moins une pompe pour générer un flux d'air et un réservoir d'air connecté à la pompe de manière à stocker le flux d'air généré par la pompe ;
- le module de génération et/ou de projection d'air comporte en outre au moins une vanne connectée au réservoir d'air et à la buse de projection, permettant de réguler le flux d'air à destination de la buse de projection à un volume d'air et une pression prédéterminés ;
- le boitier est configuré pour recevoir ledit au moins un organe de génération d'air ;
- au moins un organe de génération d'air est reçu dans le même logement que le capteur optique, et/ou le moteur, et/ou ledit au moins un moyen de transmission ;
- l'élément optique présente au moins une surface configurée pour être disposée dans le champ de vision du capteur optique ;
- l'élément optique présente au moins une surface au moins en partie plane ou sensiblement plane configurée pour être disposée dans le champ de vision du capteur optique ;
- l'élément optique présente au moins une surface au moins en partie sphérique ou sensiblement sphérique configurée pour être disposée dans le champ de vision du capteur optique ;
- l'élément optique présente au moins une surface au moins en partie asphérique configurée pour être disposée dans le champ de vision du capteur optique ;
- ladite au moins une surface présente une étendue supérieure ou égale à celle du champ de vision du capteur optique ;
- l'élément optique est disposé de façon centrée par rapport au premier axe de rotation.

L'invention concerne également un système d'assistance à la conduite comportant un capteur optique comprenant une optique. Selon l'invention, ledit système comporte un dispositif de protection du capteur optique tel que défini précédemment.

D'autres caractéristiques et avantages de l'invention apparaitront plus clairement à la lecture de la description suivante, donnée à titre d'exemple illustratif et non limitatif, et des dessins annexés parmi lesquels :
- la [Fig.1] (figure 1) représente de façon schématique un véhicule automobile comprenant un système d'assistance à la conduite selon l'invention,
- la [Fig.2] (figure 2) est une vue en perspective d'un dispositif de protection de capteur optique,
- la [Fig.3] (figure 3) est une vue en éclaté du dispositif de protection de la [Fig.2] (figure 2) sur laquelle on a ôté un boitier recevant les différents éléments dudit dispositif,
- la [Fig.4] (figure 4) est une représentation schématique d'un élément optique et d'une buse de projection d'air dudit dispositif,
- la [Fig.5a] (figure 5a) est une représentation schématique d'une vue de côté de l'élément optique avec une goutte d'eau,
- la [Fig. 5b] figure 5b est une représentation schématique de l'élément optique de la [Fig.5a] figure 5a après projection d'un flux d'air,
- la [Fig.6a] (figure 6a) est une représentation schématique d'une zone de l'élément optique soumise au flux d'air, et
- la [Fig.6b] (figure 6b) est une représentation schématique de l'élément optique et de la surface soumise au flux d'air après rotation de l'élément optique.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

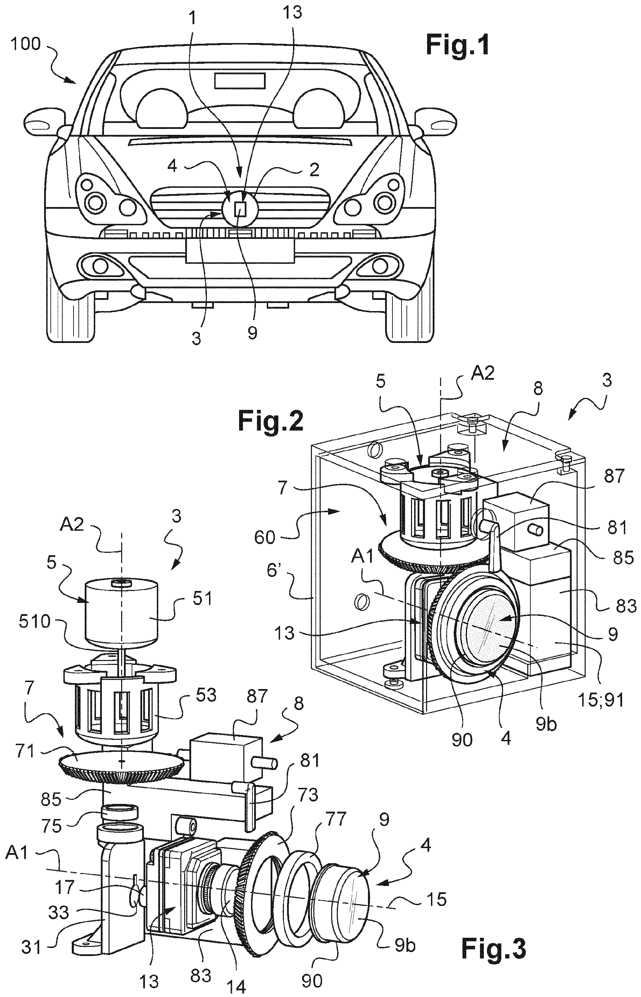

La [Fig.1] (figure 1) montre un véhicule automobile 100 équipé d'au moins un système d'assistance à la conduite 1 selon l'invention.

Le système d'assistance à la conduite 1 comporte notamment au moins un capteur optique 13 et un dispositif de protection 3 du capteur optique 13 mieux visible sur les [Fig.2] et [Fig.3] (figures 2 et 3).

Le capteur optique 13 est par exemple un capteur optique 13 de prise de vues tel qu'une caméra. Il peut s'agir d'un capteur CCD (pour "charged coupled device" en anglais à savoir un dispositif à transfert de charge) ou d'un capteur CMOS comportant une matrice de photodiodes miniatures. Selon une autre variante, il peut s'agir d'un capteur pour télédétection par laser dit capteur LIDAR, acronyme en anglais de "light detection and ranging".

Comme cela est mieux visible sur la [Fig.3] (figure 3), le capteur optique 13 comporte une optique 14 d'axe optique 15. L'optique 14 est par exemple un objectif. Un objectif peut comporter au moins une lentille, en particulier plusieurs lentilles suivant le champ de vision et la résolution, par exemple entre deux et dix lentilles, généralement quatre ou cinq lentilles, voire dix lentilles dans le cas d'une optique dite œil de poisson ("fish-eye" en anglais). Au moins une des lentilles de l'optique 14 est par exemple convexe (bombée) de convexité orientée vers l'extérieur du capteur optique 13, par exemple pour une optique dite œil de poisson ("fish-eye" en anglais).

On peut prévoir de plus un support 17 du capteur optique 13. Ce support 17 est agencé à l'arrière du capteur optique 13 du côté opposé à l'optique 14.

Selon le mode de réalisation illustré, le capteur optique 13 est destiné à être monté dans le dispositif de protection 3. Plus précisément, le capteur optique 13 et notamment son support 17 sont destinés à être montés fixes dans le dispositif de protection 3.

En outre, le dispositif de protection 3 peut comporter un socle 31 destiné à être fixé au boitier 6' et sur lequel est fixé le support 17 du capteur optique 13. À cet effet, un orifice 33 peut être ménagé sur le socle 31 pour recevoir un axe du support 17.

Selon l'exemple illustré sur la [Fig.1] (figure 1), le dispositif de protection 3 est monté à l'avant du véhicule automobile 100 au niveau d'un pare-chocs. Bien entendu, en variante le dispositif de protection 3 peut être monté à l'arrière du véhicule automobile 100, par exemple au niveau du pare-chocs ou de la plaque d'immatriculation. Il peut aussi par exemple être monté sur un côté du véhicule, par exemple au niveau d'un rétroviseur.

Le dispositif de protection 3 peut être fixé selon toute technique connue, sur tout élément 2 du véhicule 100, tel qu'un élément de carrosserie ou un élément extérieur tel qu'un pare-chocs, un rétroviseur ou une plaque d'immatriculation. À cet effet, on peut citer de façon non exhaustive un système de clips, un système de vissage, ou encore un système de collage.

### Dispositif de protection

Plus précisément, en se référant de nouveau aux [Fig.2] et [Fig.3] (figures 2 et 3), le dispositif de protection 3 comporte :
- au moins un accessoire 4 pour véhicule automobile 100 (en se référant également à la [Fig.1] (figure 1)), cet accessoire 4 étant monté mobile en rotation autour d'un premier axe de rotation A1 et ayant pour fonction la protection du capteur optique 13, et
- un actionneur, plus précisément un moteur 5, notamment un moteur électrique, configuré pour entrainer en rotation l'accessoire 4.

Le dispositif de protection 3 est donc un dispositif motorisé.

Le dispositif de protection 3 comporte avantageusement en outre un boitier 6' ([Fig.2] - figure 2) pour contenir ou former un support pour l'ensemble des éléments du dispositif de protection 3. Le boitier 6' peut également contenir le capteur optique 13.

En particulier, le dispositif de protection 3 peut comporter un premier sous-ensemble et un deuxième sous-ensemble, assemblés l'un à l'autre et agencés dans le boitier 6'. Le premier sous-ensemble peut comporter l'accessoire 4. Le deuxième sous-ensemble peut comporter le moteur 5.

### Accessoire

L'accessoire 4 ou moyen de protection peut être au moins partiellement transparent.

Selon le mode de réalisation décrit, l'accessoire 4 comporte un élément optique 9 (voir [Fig.2] et [Fig.3] - figures 2 et 3).

L'élément optique 9 est destiné à protéger l'optique 14 du capteur optique 13 des projections éventuelles de salissures ou débris solides qui pourraient abimer cette optique 14. Il s'agit donc d'un élément de protection, ou plus précisément d'un masque de protection du capteur optique 13. Pour ce faire, l'élément optique 9 est destiné à être disposé en amont de l'optique 14 du capteur optique 13. Dans la présente, le terme amont est défini par rapport à l'axe optique 15 et par rapport à la scène de route dont le capteur optique 13 participe à la prise de vues. Autrement dit, on comprend par « en amont » de l'optique 14, une position dans laquelle l'élément optique 9 est disposé entre l'optique 14 et la scène de route dont le capteur optique 13 participe à la prise de vues, selon l'axe optique 15. C'est cet élément optique 9 qui est soumis aux agressions provenant de l'extérieur, c'est-à-dire aussi bien des projections d'eau, de polluants, de graviers que des dépôts de polluants ou des traces d'eau.

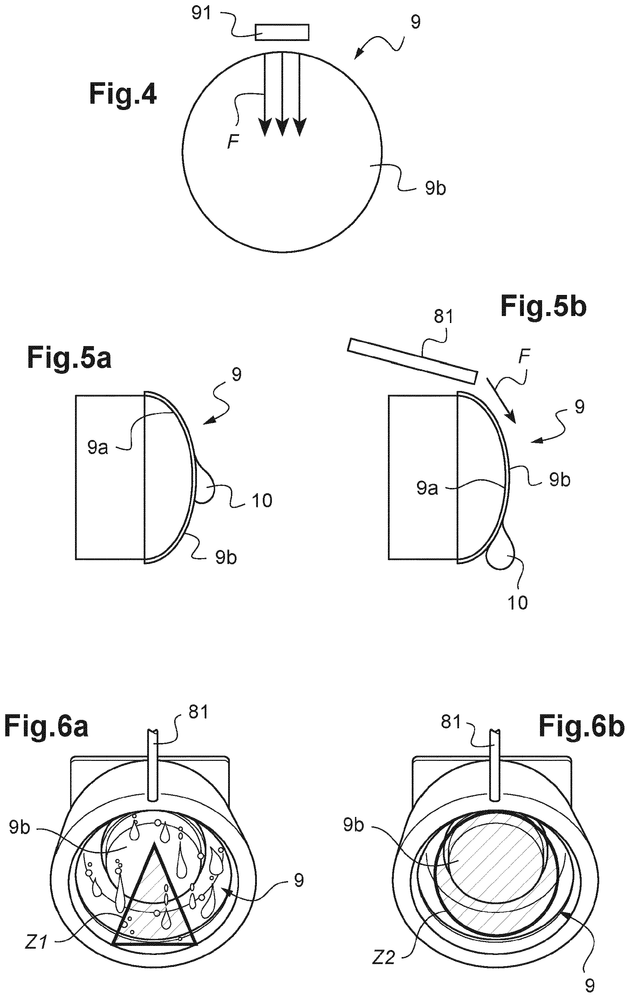

Cet élément optique 9 est avantageusement dimensionné de façon à recouvrir toute la surface de l'optique 14. L'élément optique 9 est donc agencé dans le champ de vision du capteur optique 13. À cet effet, l'élément optique 9 est avantageusement au moins en partie transparent afin de ne pas nuire à l'efficacité du capteur optique 13. Cet élément optique 9 peut être réalisé en verre ou en un matériau plastique transparent tel que du polycarbonate. L'élément optique 9 présente au moins une surface 9a, 9b (voir [Fig.5a] et [Fig.5b] - figures 5a, 5b), ici centrale, destinée à être disposée au moins partiellement en regard de l'optique 14. En se référant de nouveau aux [Fig.2] et [Fig.3] (figures 2 et 3), l'élément optique 9 présente un rebord périphérique 90 destiné à entourer au moins partiellement l'optique 14.

L'élément optique 9 peut être agencé de façon centrée par rapport au capteur optique 13, plus précisément de façon centrée par rapport à l'optique 14. L'élément optique 9 est agencé de sorte que son axe optique 91 est parallèle, voire confondu avec l'axe optique 15 du capteur optique 13.

Selon le mode de réalisation décrit, l'élément optique 9 est distinct du capteur optique 13.

Cet élément optique 9 présente un axe optique 91.

Selon l'exemple illustré avec le dispositif de protection 3 monté à l'avant du véhicule 100, l'élément optique 9 est agencé à l'avant du dispositif de protection 3 en étant orienté vers l'avant du véhicule automobile 100. Autrement dit, l'élément optique 9 est agencé à l'avant de l'accessoire 4, ou encore à l'avant du boitier 6'. L'avant du dispositif de protection 3 s'entend de la partie destinée à faire face à la scène de route dont le capteur optique 13 participe à la prise de vues, lorsque le dispositif de protection 3 est monté sur le véhicule 100 ([Fig.1] - figure 1).

Bien entendu, en variante le capteur optique 9 peut être orienté vers l'arrière du véhicule automobile 100 ou encore peut être monté sur un côté du véhicule, par exemple au niveau d'un rétroviseur.

Par ailleurs, l'élément optique 9 est agencé de façon à être entrainé en rotation par le moteur 5, pour permettre un nettoyage de l'élément optique 9 par effet centrifuge. L'élément optique 9 est avantageusement disposé de sorte que son axe de rotation A1 est parallèle, ou sensiblement parallèle, à l'axe optique 15 du capteur optique 13, lorsque le dispositif de protection 3 et le capteur optique 13 sont montés dans le boitier 6'. Avantageusement, le premier axe de rotation A1 de l'élément optique 9 est confondu avec l'axe optique 15 du capteur optique 13. Ce premier axe de rotation A1 est également parallèle voire confondu avec l'axe optique 91 de l'élément optique 9.

L'élément optique 9 peut être disposé de façon centrée par rapport au premier axe de rotation A1. Cet élément optique 9 présente notamment une symétrie de révolution par rapport au premier axe de rotation A1.

Par ailleurs, lorsque le dispositif de protection 3 recevant le capteur optique 13 est monté sur le véhicule 100 (en se référant également à la [Fig.1] -figure 1), l'optique 14 et l'élément optique 9 font avantageusement saillie d'une ouverture prévue sur l'élément 2 du véhicule 100.

En outre, l'élément optique 9 peut présenter au moins une surface 9a, 9b configurée pour être disposée au moins en partie dans le champ de vision du capteur optique 13. Cette surface 9a, 9b présente avantageusement une étendue supérieure ou égale à celle du champ de vision du capteur optique 13.

Selon un mode de réalisation, cette surface 9a, 9b est au moins en partie, voire totalement, plane dans le champ de vision de l'optique 14 du capteur optique 13. L'élément optique 9 au moins en partie plan peut être réalisé de façon simple.

En variante, l'au moins une surface 9a, 9b est au moins en partie sphérique ou sensiblement sphérique dans le champ de vision du capteur optique 13.

Selon encore une autre variante, l'au moins une surface 9a, 9b est au moins en partie asphérique dans le champ de vision du capteur optique 13.

En particulier, selon le mode de réalisation décrit, l'élément optique 9 comporte une surface interne 9a et une surface externe 9b opposées. Les surfaces 9a, 9b sont mieux visibles sur les [Fig.5a] et [Fig.5b] (figures 5a et 5b). La surface interne 9a de l'élément optique 9 est la surface destinée à être agencée directement en regard de l'optique 14 du capteur optique 13.

En se référant également aux [Fig.2] et [Fig.3] (figures 2 et 3), les surfaces interne 9a et externe 9b se trouvent en partie ou complètement dans le champ de vision du capteur optique 13 lorsque le boitier 6' loge le capteur optique 13. La surface interne 9a et la surface externe 9b peuvent être parallèles. Les surfaces 9a, 9b sont avantageusement centrées par rapport au capteur optique 13, plus précisément à l'optique 14.

Par ailleurs, afin d'éviter un phénomène de condensation entre l'optique 14 et l'élément optique 9, la surface interne 9a de l'élément optique 9 présente avantageusement une propriété antibuée. En particulier la surface interne 9a de l'élément optique 9 présente un revêtement antibuée.

En variante ou en complément, la surface interne 9a et/ou externe 9b de l'élément optique 9 peut présenter une ou plusieurs des propriétés suivantes : hydrophobe, filtre infra-rouge, photocatalytique, super hydrophobe, lipophobe, hydrophile, ou encore super hydrophile, résistance aux gravillons, ou encore tout autre traitement de surface permettant de réduire l'adhésion des salissures. En particulier, grâce aux propriétés hydrophobes de la surface externe de l'élément optique 9, des gouttes d'eau éventuelles ruissèleront sur la surface externe sans laisser de traces car l'eau ne pourra pas adhérer sur cette surface externe. Ainsi, les couches ou revêtements sur la surface externe 9b l'élément optique 9, permettent de limiter les possibilités d'adhérence des polluants organiques ou minéraux ainsi que la présence de traces d'eau sur l'élément optique 9 pouvant nuire au bon fonctionnement du système d'assistance à la conduite 1. Avantageusement, une solution liquide, telle qu'une solution de type Rain-X^{®}, peut être déposée sur la surface externe 9b de l'élément optique 9 afin de former une pellicule hydrophobe. Ces exemples de réalisation sont fournis à titre illustratif et non limitatif. Par exemple, l'Homme du métier peut utiliser un élément optique 9 transparent présentant une surface externe 9b ayant d'autres propriétés permettant de limiter l'adhérence des salissures sur cette surface externe 9b sans sortir du cadre de la présente invention.

De manière optionnelle, l'élément optique 9 peut également comprendre un système de dégivrage ou de désembuage intégré pour pouvoir garantir une bonne opérabilité du système d'assistance à la conduite 1 quelles que soient les conditions météorologiques, comme un filament ou une résistance de dégivrage par exemple.

On prévoit avantageusement au moins un moyen de limitation de la condensation, appelé par la suite moyen anti-condensation (non représenté sur les figures). Un tel moyen anti-condensation peut être prévu au niveau du rebord de l'élément optique 9 entourant au moins partiellement l'optique 14. À titre d'exemple non limitatif, le moyen anti-condensation peut comprendre au moins un orifice traversant. De préférence, lorsque plusieurs orifices sont prévus, ils sont agencés de façon symétrique par rapport au premier axe de rotation A1 de l'élément optique 9. De plus, on peut prévoir une ou plusieurs membranes semi-perméables (non représentées), respectivement agencées au moins au niveau d'un orifice. Ces membranes sont perméables à l'air et imperméables à l'eau, favorisent ainsi une bonne ventilation entre l'optique 14 et l'élément optique 9 et empêche ainsi l'accumulation de condensation.

Par ailleurs, selon une variante de réalisation non représentée, le dispositif de protection 3 peut comporter en outre un boitier rotatif solidaire de l'élément optique 9 destiné à être entrainé en rotation par le moteur 5 par l'intermédiaire du moyen de transmission 7. Il peut s'agir notamment d'un boitier rotatif apte à recevoir au moins partiellement le capteur optique 13.

### Motorisation

En ce qui concerne le moteur 5, il s'agit avantageusement d'un moteur électrique de petite taille, voire miniature.

Par moteur électrique de petite taille on entend dans le cadre de la présente invention un moteur pas à pas, un actuateur, un moteur à courant continu avec ou sans balai, un moteur asynchrone ou un moteur synchrone, dont la masse est inférieure à 10kg, voire inférieure à 1kg, en particulier utilisés pour actionner des équipements pour les véhicules.

Par moteur électrique miniature on entend dans le cadre de la présente invention un moteur pas à pas, un actuateur, un moteur à courant continu avec ou sans balais, un moteur asynchrone ou un moteur synchrone, dont la masse est inférieure à 200g, voire inférieure à 100g, de préférence comprise entre 30 g et 100g, par exemple entre 30 g et 7g.

À titre d'exemple non limitatif, le moteur 5 peut être plus particulièrement un moteur sans balais, aussi connu sous la dénomination « brushless motor » en anglais.

Le moteur 5 peut avoir une vitesse de rotation comprise entre 1000 et 50000 tours/minute, de préférence entre 5000 et 20000 tours/minute, et de manière encore préférée entre 7000 et 15000 tours/minute. De telles vitesses de rotation permettent l'élimination d'éventuelles salissures qui se seraient déposées sur l'élément optique 9 par effet centrifuge et permettent ainsi de maintenir l'optique 14 du capteur optique 13 propre pour assurer un fonctionnement optimisé du système d'assistance à la conduite 1. Selon un mode de réalisation particulièrement avantageux décrit par la suite, la vitesse de rotation peut être réduite à une vitesse de l'ordre de 4000 à 5000 tours minute.

Le moteur 5 est par exemple alimenté électriquement par une alimentation reliée au circuit électrique général du véhicule 100 (en se référant également à la - [Fig.1] - figure 1).

En se référant de nouveau aux [Fig.2] et [Fig.3] (figures 2 et 3), le moteur 5 est monté rotatif autour d'un deuxième axe de rotation A2. Le moteur 5 comporte un rotor 51 et un stator 53 fixe, le rotor 51 étant mobile en rotation par rapport au stator fixe 53. Le rotor 51 présente un arbre rotatif 510. Selon le mode de réalisation illustré, le stator 53 est disposé autour du rotor 51. Le stator 53 est donc extérieur et le rotor 51 intérieur.

Le moteur 5 est configuré pour entrainer en rotation l'accessoire 4, à savoir dans cet exemple l'élément optique 9.

Le moteur 5, en particulier le rotor 51, est monté rotatif autour d'un deuxième axe de rotation A2. Le moteur 5 est agencé de sorte que son axe de rotation A2 est sécant avec le premier axe de rotation A1 de l'élément optique 9, et avec l'axe optique 15 du capteur optique 13. Plus particulièrement, le moteur 5 est agencé de sorte que son axe de rotation A2 est perpendiculaire ou sensiblement perpendiculaire au premier axe de rotation A1 de l'élément optique 9, et à l'axe optique 15 du capteur optique 13. Un tel agencement permet d'obtenir un ensemble compact reçu dans le boitier 6'.

Dans ce cas, le dispositif de protection 3 comporte au moins un moyen de transmission 7 du mouvement de l'arbre rotatif du moteur électrique à l'élément optique. Selon l'exemple illustré, le moyen de transmission 7 comporte au moins deux roues crantées ou dentées 71 et 73. Une première roue crantée 71 est disposée de manière à pouvoir tourner autour du deuxième axe de rotation A2. Une deuxième roue crantée 73 est disposée en prise avec la première roue crantée 71, et de manière à pouvoir tourner autour du premier axe de rotation A1. L'arbre rotatif 510 est couplé à la première roue crantée 71 pour l'entrainer en rotation autour du deuxième axe de rotation A2. Cette première roue crantée 71 entraine à son tour la deuxième roue crantée 73 autour du premier axe de rotation A1. La première roue crantée 71 peut être montée sur le socle 31 avec interposition d'un roulement, tel qu'un roulement à billes 75.

La deuxième roue crantée 73 est configurée pour entrainer en rotation l'élément optique 9. On peut prévoir notamment un autre roulement, tel qu'un roulement à billes 77, entre la deuxième roue crantée 73 et l'élément optique 9, notamment le rebord périphérique 90 de l'élément optique 9. La deuxième roue crantée 73 présente un orifice central pour recevoir au moins en partie l'élément optique 9 et le roulement 77.

Pour un agencement compact, la deuxième roue crantée 73 peut être disposée également autour de l'optique 14 du capteur optique 13.

### Module de génération et/ou de projection d'air

Selon un mode de réalisation particulier, le dispositif de protection 3 comporte en outre un module 8 de génération et/ou de projection d'air. Ce module 8 est prévu pour générer et/ou pour projeter au moins un flux d'air sur au moins une zone de l'élément optique 9. Le flux d'air projeté sur l'élément optique 9 est schématisé par les flèches *F* sur les [Fig.4] et [Fig.5b] (figures 4 et 5b).

En particulier, il s'agit d'un flux d'air *F* comprimé. Le flux d'air *F* comprimé est notamment de pression inférieure à 10bars, par exemple entre 1bar et 2bars, et de préférence de l'ordre de 1,5bars.

Le module 8 de génération et/ou de projection d'air ([Fig.2] et [Fig.3] - figures 2 et 3) est également configuré pour générer un volume d'air prédéterminé, par exemple de l'ordre de 10mL.

Pour ce faire, le module 8 de génération et/ou de projection d'air comporte au moins une buse de projection d'air 81, visible sur les [Fig.2] et [Fig.3] (figures 2 et 3) et représentée de façon très schématique sur les [Fig.4], [Fig.5b] et [Fig.6a] et [Fig.6b] (figures 4 et 5b, et 6a, 6b).

La buse de projection d'air 81 est agencée fixe par rapport à l'élément optique 9. Cette buse de projection d'air 81 est située au-dessus de l'élément optique 9, en référence à la disposition des éléments sur les [Fig.2] à [Fig.4 et [Fig.5b] à [Fig.6b] (figures 2 à 4

et 5b à 6b) qui correspond à l'agencement final sur le véhicule automobile. La buse de projection d'air 81 est notamment agencée à proximité de l'élément optique 9.

La buse de projection d'air 81 est de plus agencée de manière à projeter le flux d'air *F* au moins sur la zone centrale de l'élément optique 9. En particulier, la buse de projection d'air 81 est agencée de manière à projeter le flux d'air *F* sur la zone centrale et éventuellement sur une zone inférieure de l'élément optique 9. Le terme inférieur est désigné en référence à la disposition des éléments sur la [Fig.6a] (figure 6a). La zone inférieure correspond à la zone la plus éloignée de la buse de projection d'air 81. L'ensemble de la zone de la surface externe 9b de l'élément optique 9 sur laquelle est projeté le flux d'air *F* est référencé par *Z1* et est représenté de façon schématique sur la [Fig.6a] (figure 6a). La forme de la buse de projection d'air 81 peut être modifiée de manière à adapter le flux d'air *F.* Cette représentation de la zone *Z1* soumise au flux d'air *F* est très schématique, et en particulier, l'élément optique 9 étant mobile en rotation, il est clair que la zone *Z1* de l'élément optique 9 soumise au flux d'air *F* n'est pas la même au cours de la rotation.

Selon l'exemple illustré, la buse de projection d'air 81, notamment son extrémité, peut présenter une forme générale conique, il en résulte que le flux d'air *F* projeté atteint une zone *Z1* de l'élément optique 9, de forme générale triangulaire ou en « V ». Dans cet exemple, le sommet de la forme triangulaire est au niveau ou à proximité du centre de la surface externe 9b de l'élément optique 9 et la base de la forme triangulaire au niveau de la partie inférieure, en référence à la disposition sur la [Fig.6a] (figure 6a), de la surface externe 9b de l'élément optique 9.

En se référant aux [Fig.5a] et [Fig.5b] (figures 5a et 5b), la projection du flux d'air *F* permet d'éjecter les petites gouttes d'eau 10 qui resteraient au centre ou sensiblement au centre de l'élément optique 9. Le flux d'air *F* peut être projeté de façon régulière sur la surface externe 9b de l'élément optique 9.

En particulier, le module 8 de génération et/ou de projection d'air peut être mis en œuvre pendant la rotation de l'élément optique 9. En combinaison avec la rotation de l'élément optique 9, toute ou quasiment toute la surface externe 9b de l'élément optique 9 est balayée par le flux d'air *F*, comme schématisé par la zone circulaire Z2 sur la[Fig.6b] (figure 6b).

Le flux d'air *F* avantageusement comprimé projeté par la buse de projection d'air 81 permet, de manière complémentaire à la rotation de l'élément optique 9, d'assurer un nettoyage optimisé de ce dernier. En effet, quand on se rapproche du centre de l'élément optique 9, il se peut que des petites gouttes d'eau ou salissures situées au centre ou à proximité du centre de l'élément optique 9 soient plus difficiles à éliminer car la vitesse de rotation au centre peut ne pas être suffisante pour les éjecter. Une telle goutte d'eau est schématisée et désignée par la référence 10 sur les [Fig.5a] et [Fig.5b] (figures 5a et 5b). Pour éliminer ces petites gouttes d'eau au centre, il convient de tourner à une vitesse très rapide par exemple supérieure à 10000 tours minute. En alternative, en projetant un petit volume d'air comprimé, par exemple 10mL d'air comprimé à 1,5bars, selon une certaine durée, à savoir 100ms dans le cas décrit pour relâcher les 10mL prédéterminés d'air comprimé, le temps de relâcher ce volume d'air donné, toute ou quasiment toute la surface externe 9b de l'élément optique 9 passe une à plusieurs reprises, par exemple six à sept fois, sous le flux d'air *F*.

Ceci permet d'éjecter non seulement les gouttes d'eau 10 du centre de la surface externe 9b de l'élément optique 9 mais également celles en périphérie. Le jet d'air venant compléter la rotation de l'élément optique 9 pour le nettoyage de ce dernier, la vitesse du moteur 5 peut être réduite notamment autour de 4000 à 5000 tours minute.

Bien entendu, l'exemple d'un volume d'air de 10mL à une pression de 1,5bars est un mode de réalisation illustratif et non limitatif. Les valeurs de volume et de pression peuvent être adaptées, en particulier dans l'optique de minimiser le dispositif de protection 3.

Selon un autre mode de réalisation, on peut envisager une projection d'air en continu sur la surface externe 9b de l'élément optique 9.

Par ailleurs, selon une variante non illustrée, le dispositif de protection 3 peut comprendre plusieurs buses de projection, et notamment de projection d'un autre fluide, tel que du liquide de nettoyage.

Le module 8 de génération et/ou de projection d'air comprend également au moins un organe de génération d'air. Il peut s'agir par exemple d'un organe externe qui n'est pas rattaché au moteur 5. On peut citer de façon non limitative et non exhaustive, un ou plusieurs pistons, une ou plusieurs pompes, un ou plusieurs réservoirs d'air, ou encore une ou plusieurs turbines. Le module 8 de génération et/ou de projection d'air peut comprendre aussi une ou plusieurs vannes ou électrovannes.

Selon l'exemple particulier illustré sur les [Fig.2] et [Fig.3] (figures 2 et 3), le module 8 de génération et/ou de projection d'air comporte :
- au moins une pompe 83 ou micro-pompe, pour générer un flux d'air, et
- un réservoir d'air 85 connecté à la pompe 83 de manière à stocker le flux d'air généré par la pompe 83.

Le module 8 de génération et/ou de projection d'air comporte encore dans cet exemple au moins une vanne ou électrovanne 87 connectée au réservoir d'air 85 et à la buse de projection 81, permettant de réguler et contrôler le flux d'air à destination de la buse de projection 81, notamment pour délivrer un volume d'air prédéterminé, par exemple 10mL, à une pression prédéterminée, par exemple 1,5bars. La vanne 87 ou l'électrovanne permet de relâcher le flux d'air de manière séquentielle.

Bien entendu, on peut envisager tout autre moyen permettant de générer ou produire un flux d'air. Tout moyen permet d'amener cet air et/ou de projeter cet air sur la surface externe 9b de l'élément optique 9 est également envisageable.

Selon une alternative non représentée, le moteur 5 prévu pour l'entrainement en rotation de l'élément optique 9 peut être utilisé pour la génération du flux d'air *F* à projeter sur l'élément optique 9.

### Boitier

En se référant de nouveau à la [Fig.3] (figure 3), le boitier 6' est avantageusement un boitier 6' étanche. Le boitier 6' peut être réalisé en tout matériau approprié connu de l'Homme du métier.

Ce boitier 6' est configuré pour recevoir le capteur optique 13 et le moteur 5. Notamment, le boitier 6' peut définir un logement 60 recevant à la fois le capteur optique 13 et le moteur 5.

Ce boitier 6' est peut recevoir également le moyen de transmission 7 du mouvement de l'arbre rotatif 510 à l'élément optique 9. Le moyen de transmission 7 peut être reçu dans le même logement 60 que le moteur 5 et le capteur optique 13.

Comme dit précédemment, le dispositif de protection 3 peut comporter un organe de génération d'air, et dans ce cas le boitier 6' peut recevoir cet organe de génération d'air, notamment dans le même logement que le capteur optique 13, le moteur 5, et le moyen de transmission 7.

Selon le mode de réalisation illustré, le logement 60 contient également la pompe 83, le réservoir d'air 85 et la vanne ou électrovanne 87. Bien entendu, la pompe 83 et le réservoir d'air 85 peuvent être déportés, c'est-à-dire qu'ils peuvent ne pas être agencés dans le boitier 6' à côté du capteur optique 13.

Par ailleurs, on prévoit avantageusement, un agencement étanche au niveau du boitier 6' à l'arrière du moteur 5 pour le passage des câbles ou fils afin de limiter l'entrée de vapeur d'eau et/ou autres contaminants à l'intérieur du dispositif de protection 3.

Ainsi, en fonctionnement, l'actionneur, plus précisément le moteur 5, entraine en rotation la première roue crantée 71 qui entraine à son tour la deuxième roue crantée 73 en prise avec l'élément optique 9. La rotation de l'élément optique 9, éventuellement combinée à la projection d'un fluide, tel qu'un flux d'air comprimé sur la surface externe 9b de l'élément optique 9, assure l'élimination des salissures du fait de la force centrifuge que ces dernières subissent. Le champ de vision du capteur optique 13 reste ainsi dégagé.

De plus, la réalisation de ce dispositif de protection 3 avec un axe de rotation A2 du moteur 5 sécant voire perpendiculaire par rapport à l'axe de rotation A1 de l'élément optique 9, permet de réduire l'encombrement du dispositif de protection 3 et d'obtenir un dispositif 3 très compact. Ceci facilite notamment son montage sur le véhicule automobile 100.

## Revendications

1. Dispositif (3) de protection d'un capteur optique (13) de système d'assistance à la conduite (1) pour véhicule automobile (100), le capteur optique (13) comprenant une optique (14), ledit dispositif (3) comportant :
- un élément optique (9) configuré pour être disposé en amont de l'optique (14) du capteur optique (13) et monté mobile en rotation autour d'un premier axe de rotation (A1), et
- un moteur (5) électrique configuré pour entrainer en rotation l'élément optique (9),
**caractérisé en ce que** le moteur (5) électrique comprend un rotor (51) configuré pour tourner autour d'un deuxième axe de rotation (A2) sécant avec le premier axe de rotation (A1) de l'élément optique (9).

2. Dispositif (3) selon la revendication précédente, dans lequel le deuxième axe de rotation (A2) du moteur (5) électrique est sensiblement perpendiculaire au premier axe de rotation (A1) de l'élément optique (9).

3. Dispositif (3) selon l'une quelconque des revendications précédentes, dans lequel l'élément optique (9) est configuré pour être agencé par rapport à l'optique (14) du capteur optique (13), de sorte que le premier axe de rotation (A1) de l'élément optique (9) soit parallèle, voire confondu avec l'axe optique (15) du capteur optique (13).

4. Dispositif (3) selon l'une quelconque des revendications précédentes, comportant au moins un moyen de transmission (7) du mouvement du rotor (51) du moteur (5) électrique à l'élément optique (9).

5. Dispositif (3) selon l'une quelconque des revendications précédentes, comportant un boitier (6') configuré pour recevoir le capteur optique (13) et le moteur (5) électrique.

6. Dispositif (3) selon l'une quelconque des revendications précédentes, dans lequel ledit dispositif (3) comporte en outre un module (8) de génération et/ou de projection d'air sur au moins une zone (*Z1*) de l'élément optique (9).

7. Dispositif (3) selon la revendication précédente, dans lequel le module (8) de génération et/ou de projection d'air comporte au moins une buse de projection d'air (81).

8. Dispositif (3) selon la revendication précédente, dans lequel la buse de projection d'air (81) est agencée de manière à projeter un flux d'air (F) sur la zone centrale de l'élément optique.

9. Dispositif (3) selon l'une quelconque des revendications précédentes 6 à 8, dans lequel le module (8) de génération et/ou de projection d'air comprend au moins un organe de génération d'air, choisi parmi au moins un piston, une pompe (83), un réservoir d'air, une turbine.

10. Dispositif (3) selon l'une quelconque des revendications précédentes 6 à 9, dans lequel le module (8) de génération et/ou de projection d'air comporte :
- au moins une pompe (83) pour générer un flux d'air, et
- un réservoir d'air (85) connecté à la pompe (83) de manière à stocker le flux d'air généré par la pompe (83).

## Patentansprüche

1. Vorrichtung (3) zum Schutz eines optischen Sensors (13) eines Fahrerassistenzsystems (1) für ein Kraftfahrzeug (100), wobei der optische Sensor (13) eine Optik (14) umfasst, wobei die Vorrichtung (3) umfasst:
- ein optisches Element (9), das dazu ausgestaltet ist, der Optik (14) des optischen Sensors (13) vorgelagert zu sein und mobil um eine erste Drehachse (A1) montiert zu sein, und
- einen Elektromotor (5), der dazu ausgestaltet ist, das optische Element (9) in Drehung zu versetzen,
**dadurch gekennzeichnet, dass** der Elektromotor (5) einen Rotor (51) umfasst, der dazu ausgestaltet ist, sich um eine zweite Drehachse (A2) zu drehen, die die erste Drehachse (A1) des optischen Elements (9) schneidet.

2. Vorrichtung (3) nach dem vorhergehenden Anspruch, wobei die zweite Drehachse (A2) des Elektromotors (5) im Wesentlichen senkrecht zur ersten Drehachse (A1) des optischen Elements (9) verläuft.

3. Vorrichtung (3) nach einem der vorhergehenden Ansprüche, wobei das optische Element (9) dazu ausgestaltet ist, im Verhältnis zur Optik (14) des optischen Sensors (13) so angeordnet zu sein, dass die erste Drehachse (A1) des optischen Elements (9) parallel, sogar mit dieser zusammenfallend, zur optischen Achse (15) des optischen Sensors (13) verläuft.

4. Vorrichtung (3) nach einem der vorhergehenden Ansprüche, die mindestens ein Mittel zur Übertragung (7) der Bewegung des Rotors (51) des Elektromotors (5) auf das optische Element (9) umfasst.

5. Vorrichtung (3) nach einem der vorhergehenden Ansprüche, die ein Gehäuse (6') umfasst, das dazu ausgestaltet ist, den optischen Sensor (13) und den Elektromotor (5) aufzunehmen.

6. Vorrichtung (3) nach einem der vorhergehenden Ansprüche, wobei die Vorrichtung (3) außerdem ein Modul (8) zum Erzeugen und/oder Sprühen von Luft in mindestens einem Gebiet (*Z1*) des optischen Elements (9) umfasst.

7. Vorrichtung (3) nach dem vorhergehenden Anspruch, wobei das Modul (8) zum Erzeugen und/oder Sprühen von Luft mindestens eine Luftsprühdüse (81) umfasst.

8. Vorrichtung (3) nach dem vorhergehenden Anspruch, wobei die Luftsprühdüse (81) so angeordnet ist, dass sie einen Luftstrom (*F*) auf den mittleren Bereich des optischen Elements sprüht.

9. Vorrichtung (3) nach einem der vorhergehenden Ansprüche 6 bis 8, wobei das Modul (8) zum Erzeugen und/oder Sprühen von Luft mindestens ein Lufterzeugungsglied umfasst, das aus mindestens einem Kolben, einer Pumpe (83), einem Luftreservoir, einer Turbine ausgewählt ist.

10. Vorrichtung (3) nach einem der vorhergehenden Ansprüche 6 bis 9, wobei das Modul (8) zum Erzeugen und/oder Sprühen von Luft umfasst:
- mindestens eine Pumpe (83) zum Erzeugen eines Luftstroms und
- ein Luftreservoir (85), das mit der Pumpe (83) verbunden ist, so dass es den von der Pumpe (83) erzeugten Luftstrom speichert.

## Claims

1. A device (3) for protecting an optical sensor (13) of a driver assistance system (1) for a motor vehicle (100), the optical sensor (13) comprising an optic (14), said device (3) including:
- an optical element (9) configured to be positioned upstream of the optic (14) of the optical sensor (13) and rotatably mounted about a first axis of rotation (A1), and
- an electric motor (5) configured to rotate the optical element (9),
**characterized in that** the electric motor (5) comprises a rotor (51) configured to rotate about a second axis of rotation (A2) that intersects the first axis of rotation (A1) of the optical element (9).

2. The device (3) as claimed in the preceding claim, wherein the second axis of rotation (A2) of the electric motor (5) is substantially perpendicular to the first axis of rotation (A1) of the optical element (9).

3. The device (3) as claimed in any one of the preceding claims, wherein the optical element (9) is configured to be arranged with respect to the optic (14) of the optical sensor (13) so that the first axis of rotation (A1) of the optical element (9) is parallel to or coincident with the optical axis (15) of the optical sensor (13).

4. The device (3) as claimed in any one of the preceding claims, including at least one means (7) for transmitting the movement of the rotor (51) of the electric motor (5) to the optical element (9).

5. The device (3) as claimed in any one of the preceding claims, including a housing (6') configured to receive the optical sensor (13) and the electric motor (5).

6. The device (3) as claimed in any one of the preceding claims, wherein said device (3) further comprises a module (8) for generating and/or spraying air onto at least one region (*Z1*) of the optical element (9).

7. The device (3) as claimed in the preceding claim, wherein the air generating and/or spraying module (8) includes at least one air spray nozzle (81).

8. The device (3) as claimed in the preceding claim, wherein the air spray nozzle (81) is arranged so that it sprays an air jet (*F*) onto the central region of the optical element.

9. The device (3) as claimed in any one of the preceding claims 6 to 8, wherein the air generating and/or spraying module (8) comprises at least one air generating member, selected from at least a piston, a pump (83), an air reservoir, and an impeller.

10. The device (3) as claimed in any one of the preceding claims 6 to 9, wherein the air generating and/or spraying module (8) includes:
- at least one pump (83) for generating an air jet, and
- an air reservoir (85) connected to the pump (83) so as to store the air jet generated by the pump (83).
